# DEMANDE DE BREVET EUROPEEN

(11) **EP 0 891 031 A1**
(43) Date de publication de la demande: **13.01.1999**
(21) Numéro de dépôt: 98401698.0
(22) Date de dépôt: 06.07.1998
(51) Int. Cl.: H02K 5/16, F16C 35/067, F16C 35/04

(54) **Organe de blocage d'une bague de roulement dans un palier d'alternateur**

(30) Priorité: 07.07.1997 FR 9708582
(71) Demandeur: VALEO EQUIPEMENTS ELECTRIQUES MOTEUR, 94000 Créteil (FR)
(72) Inventeur: Abadia, Roger, 93360 Neuilly/Plaisance (FR); Rondier, Patrick, 95360 Montmagny (FR)
(74) Mandataire: Le Forestier, Eric

(57) **Abrégé**

Dans la combinaison d'un palier (28), d'une bague (6) et d'un organe de blocage (2), l'organe (2) est adapté à former contre la bague (6) reçue dans le palier (28) un premier appui (40) parallèlement à un axe du palier (28) dans un premier sens, et simultanément contre le palier (28) un deuxième appui (42) parallèlement à l'axe dans un deuxième sens opposé au premier sens. L'organe (2) est adapté à former le deuxième appui (42) après une rotation de l'organe (2) par rapport au palier (28) autour de l'axe, à partir d'une position dans laquelle l'organe (2) ne forme pas un appui sur le palier (28).

## Description

La présente invention concerne les organes de blocage d'une bague reçue dans un palier.

On connaît un alternateur ayant un carter comprenant un palier recevant un roulement traversé par l'arbre de l'alternateur. Une bague externe du roulement est bloquée suivant la direction axiale entre d'une part un fond du palier et d'autre part une plaquette de blocage fixée par des vis dans des orifices de la paroi du palier. Un tel agencement assure une bonne tenue de la plaquette à température élevée, par exemple supérieure à 100°C, et permet une bonne sollicitation axiale de la bague. Toutefois, les têtes de vis génèrent un encombrement important à l'intérieur de l'alternateur. De plus, la mise en place des vis est une opération relativement longue.

Un but de l'invention est de pallier ces inconvénients en réduisant le volume nécessaire au blocage de la bague tout en conservant une bonne tenue à température élevée et en sollicitant suffisamment la bague.

En vue de la réalisation de ce but, on prévoit selon l'invention une combinaison d'un palier, d'une bague et d'un organe de blocage, l'organe étant adapté à former contre la bague reçue dans le palier un premier appui parallèlement à un axe du palier dans un premier sens, et simultanément contre le palier un deuxième appui parallèlement à l'axe dans un deuxième sens opposé au premier sens, dans laquelle l'organe est adapté à former le deuxième appui après une rotation de l'organe par rapport au palier autour de l'axe à partir d'une position dans laquelle l'organe ne forme pas le deuxième appui sur le palier.

Ainsi, l'organe peut avoir un encombrement réduit et sa mise en place est rapide. Il offre néanmoins une bonne sollicitation de la bague et une bonne tenue à température élevée.

Avantageusement, l'organe et le palier comportent chacun un filet, les filets étant adaptés à coopérer mutuellement pour former le deuxième appui.

Ainsi, on visse l'organe sur le palier.

Avantageusement, l'organe comporte des reliefs s'étendant suivant une direction radiale à un axe de l'organe en étant discontinus entre eux, le palier comportant des protubérances s'étendant suivant une direction radiale à un axe du palier en étant discontinues entre elles, les reliefs et les protubérances étant adaptés à coopérer mutuellement pour former le deuxième appui.

Avantageusement, l'un au moins parmi les reliefs et les protubérances présente une butée adaptée à interdire une rotation de l'organe par rapport au palier dans un sens correspondant à une suppression du deuxième appui.

Ainsi, on améliore la sécurité du blocage de la bague.

Avantageusement, l'organe comporte une partie déformable élastiquement suivant l'axe de l'organe et s'étendant entre deux zones de l'organe adaptées à former respectivement les premier et deuxième appuis.

Avantageusement, la partie déformable comporte une paroi tronconique.

Avantageusement, l'organe comporte un fond adapté à former le premier appui et présentant au moins un orifice décentré par rapport à l'axe de l'organe.

Ainsi, cet orifice peut servir de prise à un outil ou une machine pour effectuer la rotation de l'organe en vue de sa fixation au palier.

Avantageusement, l'organe présente une zone à profil courbe ayant une portion médiane adaptée à former le premier appui.

Avantageusement, la combinaison comporte des moyens pour interdire une rotation de l'organe par rapport au palier dans un sens correspondant à une suppression du deuxième appui.

On prévoit également selon l'invention un générateur de courant électrique pour véhicule automobile comportant une combinaison selon l'invention.

D'autres caractéristiques et avantages de l'invention apparaîtront encore dans la description suivante d'un mode de réalisation préféré et d'une variante donnés à titre d'exemples non limitatifs. Aux dessins annexés :
- la figure 1 est une vue en plan d'un organe de blocage d'une combinaison selon l'invention ;
- la figure 2 est une vue en coupe axiale suivant le plan II-II de l'organe de la figure 1 ;
- la figure 3 est une vue d'extrémité d'un alternateur comportant une combinaison selon l'invention ;
- la figure 4 est une vue partielle en coupe axiale de l'alternateur de la figure 3 ;
- la figure 5 est une vue à échelle agrandie du détail D de la figure 4 ; et
- la figure 6 est une vue analogue à la figure 5 montrant une variante de réalisation.

Dans le présent mode de réalisation, la combinaison selon l'invention comprend un organe de blocage 2, un flasque d'extrémité 4 et une bague ou roulement 6.

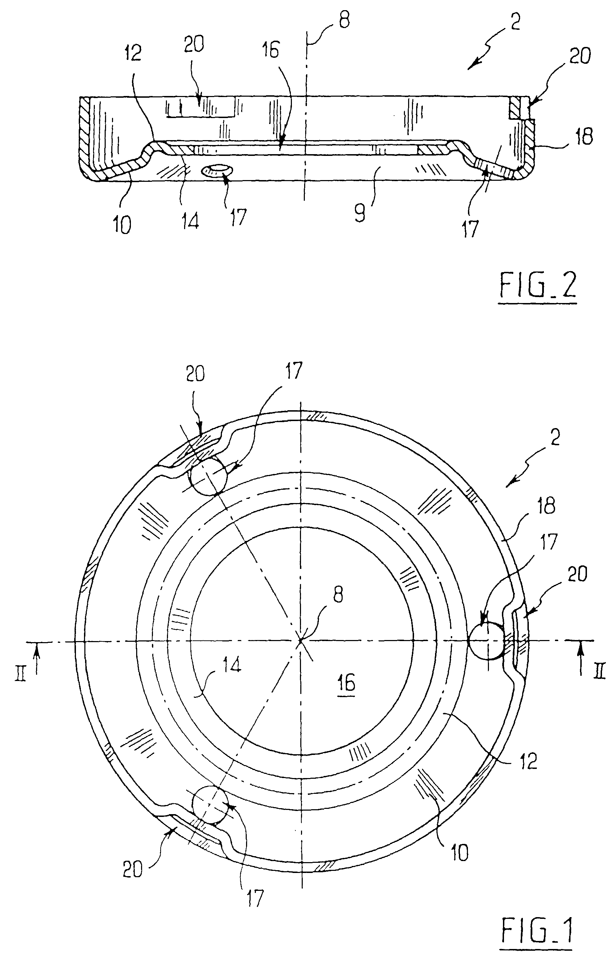

En référence aux figures 1 et 2, l'organe de blocage 2 est ici une coupelle métallique ayant une forme symétrique de révolution autour d'un axe 8. La coupelle comporte un fond 9 s'étendant généralement dans un plan perpendiculaire à l'axe 8. Le fond 9 comporte une paroi tronconique 10 ayant un angle au sommet obtus d'environ 150° en l'espèce. La section la plus étroite de la paroi tronconique 10 est prolongée vers l'intérieur par un bourrelet annulaire 12 obtenu en donnant localement une forme arrondie au profil du fond 9 dans un plan axial. Le profil du bourrelet 12 a localement un centre de courbure dirigé vers la section la plus large du cône. Le bourrelet 12 est prolongé vers l'intérieur par une paroi plane 14 perpendiculaire à l'axe 8 et présentant en son centre une ouverture 16 centrée sur l'axe 8. La paroi tronconique 10 présente des orifices 17, ici au nombre de trois, régulièrement répartis autour de l'axe 8 et décentrés par rapport à celui-ci.

La coupelle 2 comporte une couronne 18 s'étendant extérieurement à partir de la section la plus large de la paroi tronconique 10 du fond 9. La couronne 18 comprend une paroi cylindrique d'axe 8. La paroi cylindrique présente des protubérances 20, en l'espèce au nombre de trois, contiguës à un bord libre de la paroi opposé au fond 9. Chaque protubérance 20 est réalisée en pratiquant une découpe de la paroi suivant un plan perpendiculaire à l'axe 8, puis en poussant vers l'axe 8 une portion de paroi s'étendant entre la découpe et le bord libre. Chaque protubérance 20 s'étend en saillie d'une face cylindrique interne de la paroi, en direction radiale, vers l'axe 8. Chaque protubérance 20 présente une face d'appui 21 perpendiculaire à l'axe 8 et dirigée vers le fond 9, cette face correspondant au chant de la découpe. Les protubérances 20 sont discontinues entre elles. Les trois protubérances 20 sont régulièrement réparties autour de l'axe 8. En l'espèce, chaque protubérance 20 s'étend au droit d'un orifice 17. La coupelle 2 est d'un seul tenant.

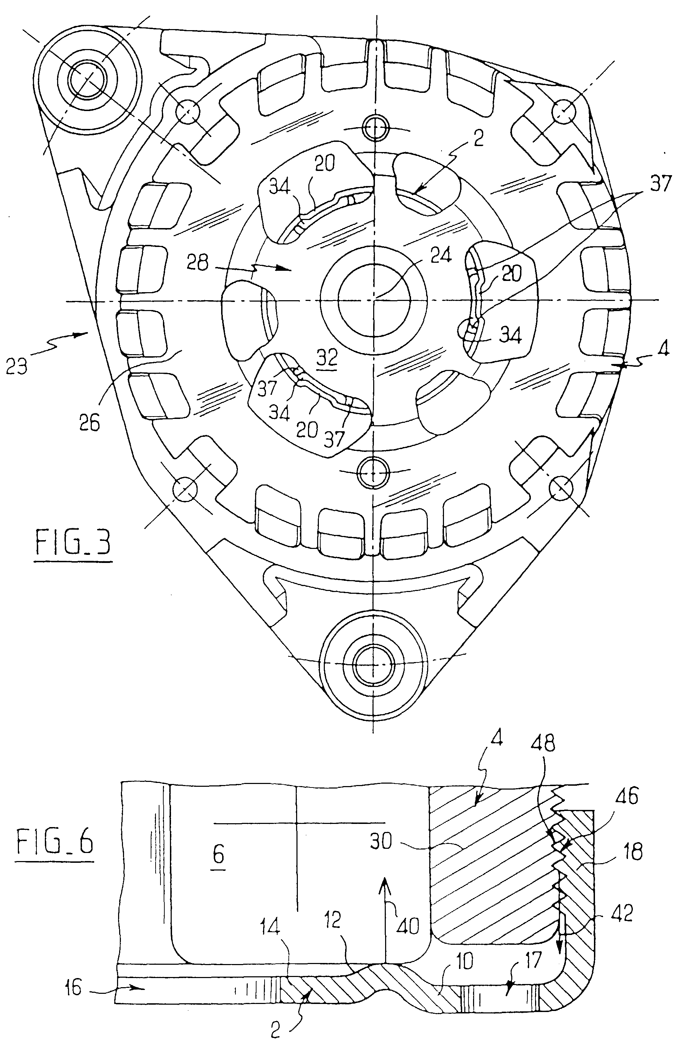

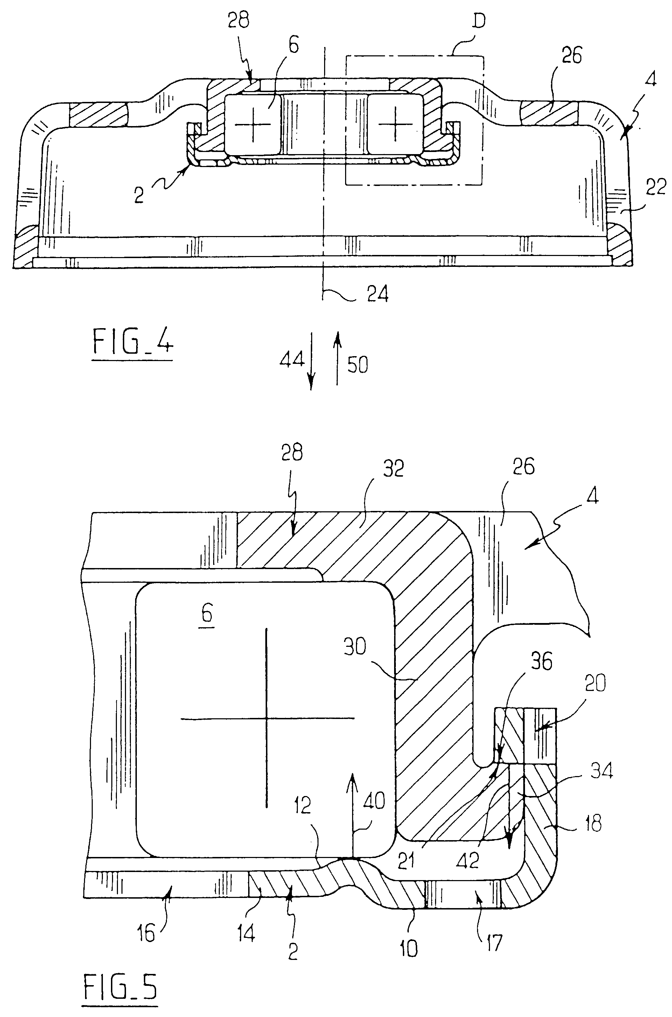

En référence aux figures 3 et 4, le flasque d'extrémité 4 pour alternateur ou générateur de courant électrique 23 de véhicule automobile comprend une paroi cylindrique 22 d'axe 24 et un fond 26 s'étendant généralement dans un plan perpendiculaire à l'axe 24. La paroi 22 et le fond 26 sont ajourés. Ce flasque 4 est destiné à venir obturer une carcasse de l'alternateur de sorte que la carcasse et le flasque 4 constituent un carter de l'alternateur.

Le fond 26 du flasque comporte un palier 28 comprenant une paroi cylindrique 30 d'axe 24 et un fond 32 perpendiculaire à l'axe 24, s'étendant dans le prolongement du fond 26 et présentant une ouverture circulaire en son centre. Les parois cylindriques 22 et 30 s'étendent d'un même côté intérieur du fond 26.

La paroi cylindrique 30 comporte trois reliefs 34 s'étendant radialement en saillie d'une face externe de cette paroi en direction opposée à l'axe 24, à savoir vers l'extérieur du palier 28. Chaque relief 34 présente une face d'appui 36 perpendiculaire à l'axe 24 et orientée vers le fond 26. Les trois reliefs 34 sont régulièrement répartis autour de l'axe 24. Les reliefs 34 sont discontinus entre eux. Chaque face d'appui 36 est limitée latéralement par deux butées respectives 37 visibles en figure 3.

En référence aux figures 4 et 5, la bague 6 est en l'espèce une bague externe d'un roulement comportant par ailleurs des éléments de roulement et une bague interne adaptée à être montée serrée sur un arbre de l'alternateur, les éléments de roulement, la bague interne et l'arbre étant classiques et n'ayant pas été représentés.

Pour le montage de l'alternateur, on loge le roulement dans le palier 28 avec une face cylindrique externe de la bague 6 en contact avec une face cylindrique interne de la paroi 30. La bague 6 est en butée contre le fond 32 suivant l'axe 24 dans un premier sens 36.

On amène ensuite la coupelle 2 en translation suivant l'axe 24, en direction de la bague 6, les axes 24 et 8 étant en coïncidence. La position angulaire de la coupelle 2 autour de l'axe 24 par rapport au palier 28 est telle que les protubérances 20 et les reliefs 34 ne sont pas en coïncidence, leurs contours respectifs étant totalement disjoints en vue suivant l'axe 24. On avance ainsi la coupelle 2 jusqu'à mettre une portion médiane du profil du bourrelet 12 du fond 9 en butée contre une face d'extrémité axiale de la bague 6. Le fond 9 réalise ainsi sur la bague 6 un premier appui 40 suivant l'axe 24 dans le premier sens 50. On continue à solliciter la coupelle 2 par la couronne 18 de façon à déplacer la couronne 18 vers le fond 26 du flasque en déformant élastiquement la paroi 10 du fond. On interrompt cette poussée lorsque les protubérances 20 devancent les reliefs 34 en direction du fond 26 suivant l'axe 24 dans le premier sens 50. A ce moment, la conicité de la paroi 10 a été inversée, comme le montre la figure 5, de sorte que la pointe du cône est maintenant opposée au fond 32. Il n'y a alors aucun appui des protubérances 20 sur les reliefs 34.

Puis, tout en maintenant la sollicitation axiale, on déplace en rotation la coupelle 2 par rapport au palier 28 autour de l'axe 24 jusqu'à disposer les reliefs 20 entre les protubérances 34 et le fond 26 suivant l'axe 24. On relâche alors la sollicitation axiale. Sous l'effet d'un rappel élastique par la paroi tronconique 10, la face d'appui 21 des reliefs 20 respectifs vient en appui contre la face d'appui 36 des protubérances 34, réalisant ainsi un deuxième appui 42 de la coupelle 2 sur le palier 28 suivant l'axe 24 dans un deuxième sens 44 opposé au premier sens 50. Les reliefs 34 et les protubérances 20 sont en prise et engagement mutuels. Le fond 9 de la coupelle 2 sollicite la bague 6 dans le premier sens 50, et la couronne 18 sollicite le palier 28 en sens contraire 44. Ces deux sollicitations sont dirigées l'une vers l'autre suivant l'axe 24. La coupelle 2 bloque ainsi la bague 6 en appui contre le fond 32 du palier. Les deux butées 37 de chaque relief 34 forment obstacle à une nouvelle rotation intempestive de la coupelle 2 par rapport au palier 28 qui entraînerait leur démontage relatif. Pour le montage de la coupelle 2 sur le palier 28, on effectue ici une translation pure, puis une rotation pure. Les orifices 17 permettent de monter facilement la coupelle 2 sur le palier 28 au moyen d'un outil s'insérant dans les orifices, ou automatiquement au moyen d'une machine.

Dans la variante de réalisation de la figure 6, une face externe cylindrique de la paroi 30 du palier 28 porte un filet 46. Il en est de même pour une face interne cylindrique de la couronne 18 qui porte un filet 48. Le deuxième appui 42 est obtenu par simple vissage de la coupelle 2 sur le palier 28 en mettant en prise mutuelle les deux filets 46 et 48. Cette fois, la translation et la rotation nécessaires au montage de la coupelle 2 sur le palier 28 sont simultanées, le montage étant effectué au moyen d'un mouvement relatif hélicoïdal.

La coupelle 2 selon l'invention permet d'obtenir une importante pression résiduelle sur la bague 6 une fois la coupelle fixée au palier 28.

Bien entendu, on pourra apporter à l'invention de nombreuses modifications sans sortir du cadre de celle-ci.

Les reliefs 34 et/ou les protubérances 20 pourront comporter des faces d'appui 21, 36 inclinées par rapport à l'axe 24 du palier de façon que l'appui correspondant produise un effet de rampe tendant à ramener la coupelle 2 en position de montage sur le palier 28 en cas de rotation relative intempestive. On pourra prévoir des moyens de blocage de la rotation de la coupelle 2 par rapport au palier 28, une fois la position de montage atteinte. Il pourra s'agir, par exemple, d'un cliquet ou rochet assurant par encliquetage une fonction d'anti-retour.

## Revendications

1. Combinaison d'un palier (28), d'une bague (6) et d'un organe de blocage (2), l'organe (2) étant adapté à former contre la bague (6) reçue dans le palier (28) un premier appui (40) parallèlement à un axe (24) du palier (28) dans un premier sens (50), et simultanément contre le palier (28) un deuxième appui (42) parallèlement à l'axe (24) dans un deuxième sens (44) opposé au premier sens (50), caractérisée en ce que l'organe (2) est adapté à former le deuxième appui (42) après une rotation de l'organe (2) par rapport au palier (28) autour de l'axe (24) à partir d'une position dans laquelle l'organe (2) ne forme pas le deuxième appui sur le palier (28).

2. Combinaison selon la revendication 1, caractérisée en ce que l'organe (2) et le palier (28) comportent chacun un filet (48, 46), les filets étant adaptés à coopérer mutuellement pour former le deuxième appui (42).

3. Combinaison selon la revendication 1, caractérisée en ce que l'organe (2) comporte des reliefs (20) s'étendant suivant une direction radiale à un axe (8) de l'organe en étant discontinus entre eux, le palier (28) comportant des protubérances (34) s'étendant suivant une direction radiale à un axe (24) du palier en étant discontinues entre elles, les reliefs (20) et les protubérances (34) étant adaptés à coopérer mutuellement pour former le deuxième appui (42).

4. Combinaison selon la revendication 3, caractérisée en ce que l'un au moins parmi les reliefs (20) et les protubérances (34) présente une butée (37) adaptée à interdire une rotation de l'organe (2) par rapport au palier (28) dans un sens correspondant à une suppression du deuxième appui (42).

5. Combinaison selon l'une quelconque des revendications 1 à 4, caractérisée en ce que l'organe (2) comporte une partie (10) déformable élastiquement suivant l'axe (8) de l'organe et s'étendant entre deux zones (12, 18) de l'organe adaptées à former respectivement les premier et deuxième appuis (40, 42).

6. Combinaison selon la revendication 5, caractérisée en ce que la partie déformable (10) comporte une paroi tronconique.

7. Combinaison selon l'une quelconque des revendications 1 à 6, caractérisée en ce que l'organe (2) comporte un fond (9) adapté à former le premier appui (40) et présentant au moins un orifice (17) décentré par rapport à l'axe (8) de l'organe.

8. Combinaison selon l'une quelconque des revendications 1 à 7, caractérisée en ce que l'organe (2) présente une zone (12) à profil courbe ayant une portion médiane adaptée à former le premier appui (40).

9. Combinaison selon l'une quelconque des revendications 1 à 8, caractérisée en ce qu'elle comporte des moyens pour interdire une rotation de l'organe (2) par rapport au palier (28) dans un sens correspondant à une suppression du deuxième appui (42).

10. Générateur de courant électrique pour véhicule automobile, caractérisé en ce qu'il comporte une combinaison selon l'une des revendications précédentes.
